# NEUE EUROPÄISCHE PATENTSCHRIFT

(11) **EP 1 576 343 B2**
(45) Veröffentlichungstag und Bekanntmachung des Hinweises auf die Entscheidung über den Einspruch: **11.07.2018**
(45) Hinweis auf die Patenterteilung: 14.02.2007
(21) Anmeldenummer: 03796003.6
(22) Anmeldetag: 07.11.2003
(51) Int. Cl.: G01G 21/30

(54) **WÄGEMODUL MIT VORRICHTUNG ZUR STAUBENTFERNUNG**
WEIGHING MODULE COMPRISING A DUST-REMOVAL DEVICE
MODULE DE PESEE POURVU D'UN DISPOSITIF DE DEPOUSSIERAGE

(30) Priorität: 15.11.2002 DE 10253601
(43) Veröffentlichungstag der Anmeldung: 21.09.2005
(73) Patentinhaber: Mettler-Toledo GmbH, 8606 Greifensee (CH)
(72) Erfinder: Emery, Jean-Christophe, CH-8603 Schwerzenbach (CH); Graf, Willi, CH-8606 Greifensee (CH)
(74) Vertreter: Leinweber & Zimmermann
(86) Internationale Anmeldenummer: PCT/EP2003/050804
(87) Internationale Veröffentlichungsnummer: WO 2004/046667

(56) Entgegenhaltungen:
- EP-A- 1 146 322
- EP-B1- 0 018 656
- DE-A1- 3 205 799
- DE-A1- 3 800 941
- DE-A1- 4 309 373
- DE-A1- 10 017 528
- DE-C2- 10 025 712
- DE-T2- 60 123 489
- DE-T2- 68 905 195
- DE-U- 8 508 424
- DE-U- 8 805 063
- DE-U1- 7 730 465
- FR-A- 998 837
- US-A- 3 722 895
- US-A- 5 791 123

## Beschreibung

Die Erfindung betrifft eine Waage, insbesondere ein Wägemodul, mit einem eine Wägezelle allseitig umgebenden Gehäuse, mit einem Kraftübertragungsglied, welches mit einer Lastauflagevorrichtung verbindbar ist, wobei das Übertragungsglied durch eine Öffnung einer Gehäusewand hindurch tritt und mit einem vertikal beweglichen Teil der Wägezelle in starrer Verbindung steht.

Solche Waagen oder Wägemodule finden ihren Einsatz bevorzugt in industrieller Umgebung, beispielsweise als sogenannte Bandwaagen, wobei das Wägemodul beispielsweise unterhalb eines Förderbandes angeordnet ist, um von letzterem transportierte Gegenstände zu verwiegen. Häufig ist jedoch die Umgebung, in welcher ein solches Wägemodul installiert ist, sehr staubig. Das heisst das Wägemodul muss von einem Schutzgehäuse umgeben sein und, insbesondere im Bereich von Öffnungen des Gehäuses, durch geeignete Massnahmen gegen das Eindringen von Staub geschützt werden. Als besonders kritisch erweist sich die der Durchführung des Kraftübertragungsgliedes dienende Gehäuseöffnung, da diese bekanntermassen zwingend vorhanden sein muss, um eine Lastauflage mit dem vertikal beweglichen Teil der Wägezelle verbinden zu können. Im Stand der Technik werden zur Vermeidung des Eindringens von Schmutz in das Innere eines Waagengehäuses verschiedene Massnahmen vorgeschlagen.

So offenbart die EP-A-1 146 322 eine Waage mit einer dichtenden Arretierung, wobei diese in einer elastischen willkürlich aufweitbaren und verkleinerbaren Einrichtung zur Anlage zwischen einem mit dem Waagengehäuse verbundenen ortsfesten Teil und einem durch die Last gegenüber dem Waagengehäuse beweglichen Teil besteht. Diese Einrichtung setzt den beweglichen Teil der Waage während des Wägevorgangs frei und hält ihn während der übrigen Zeit arretiert. Gleichzeitig besitzt die Arretierung eine gewisse Abdichtwirkung, welche besonders effizient ist, wenn die elastische Einrichtung zwischen dem Kraftübertragungsglied und dem Waagengehäuse angeordnet ist. So wird das Eindringen von Staub ins Innere des Waagengehäuses weitgehend vermieden. Eine weitere Massnahme, wie sie in der selben Schrift offenbart ist, besteht darin, das Kraftübertragungsglied mit einer topfförmigen Abdeckung zu versehen und gegebenenfalls diese als Bestandteil einer Labyrinthdichtung vorzusehen.

Die DE 85 08 424 U1 offenbart eine oberschalige Waage, bei der das Innere des Gehäuses fremdbelüftet werden kann. Das Gehäuse weist einen Anschlussstutzen auf, durch den ein Gasstrom in den Innenraum des Gehäuses eingeleitet werden kann. Die Waagschale stützt sich über ein Verbindungsstück durch einen Durchbruch im Oberteil des Gehäuses hindurch auf einen innerhalb des Gehäuses angeordneten Lastaufnehmer ab. Auf der Unterseite besitzt das Gehäuse ebenfalls einen Durchbruch, wobei sich der Lastaufnehmer bis in diesen Durchbruch hinein erstreckt.

In besonders staubiger Umgebung mögen diese Vorkehrungen zum Schutz gegen das Eindringen von Staub zwar ausreichend sein, es stellt sich jedoch das Problem, dass durch die topfförmige Abdeckung, der Abstand zwischen dem feststehenden Gehäuse des Wägemoduls und dem vertikal beweglichen Kraftübertragungsglied mitsamt Abdeckung relativ klein ist, und so die Gefahr besteht, dass sich eine Staubbrücke, sozusagen als mechanische Verbindung, zwischen den beiden Teilen ausbildet. Es kann sich dabei um Staub aus der Luft oder um von der Lastauflage herabfallendes Wägegut handeln. Bei Wägemodulen, die mit einer empfindlichen, hochauflösenden Wägezelle versehen sind, kann eine solche Staubbrücke bereits einen mechanischen Kurzschluss herstellen und dadurch das Wägeergebnis verfälschen.

Es ist daher Aufgabe der Erfindung, eine Waage, insbesondere ein Wägemodul, dahin gehend zu verbessern, dass die Ausbildung einer "Staubbrücke" zwischen feststehendem Gehäuse und beweglichem Teil der Waage vermieden wird.

Diese Aufgabe wird erfindungsgemäss mit den Merkmalen des Anspruchs 1 gelöst. Eine Waage, insbesondere ein Wägemodul mit einem eine Wägezelle allseitig umgebenden Gehäuse, weist ein vertikal bewegliches Kraftübertragungsglied auf, welches mit einer Lastauflagevorrichtung verbindbar ist, wobei das Kraftübertragungsglied durch eine Durchtrittsöffnung einer Gehäusewand hindurch tritt und mit einem vertikal beweglichen Teil der Wägezelle in starrer Verbindung steht. Es ist eine mit einer Gaszufuhr versehene Vorrichtung zur Staubentfernung vorhanden, welche zur Vermeidung einer Staubablagerung zwischen dem feststehenden Gehäuse und dem vertikal beweglichen Kraftübertragungsglied über einen mindestens einen Strömungskanal aufweisenden Gasverteiler verfügt. Der mindestens eine Strömungskanal steht mit einem Gaseinlass in Verbindung und weist einen Gasauslass auf, zur Erzeugung eines vom beweglichen Teil der Waage weg gerichteten Gasstroms.

Dies hat den Vorteil, dass sich keine Staubbrükken zwischen dem feststehenden und dem beweglichen Teil der Waage, insbesondere zwischen dem Kraftübertragungsglied und dem Waagengehäuse, bilden, und dass der Einfluss von Staub und sonstiger Verschmutzung auf das Wägeergebnis sowie auf dessen Anzeige minimiert ist.

Weitere bevorzugte Gestaltungen sind Gegestand der Unteransprüche.

Der Gasverteiler kann im wesentlichen innerhalb des Waagengehäuses angeordnet sein oder von aussen auf das Waagengehäuse aufgesetzt sein.

Mit der Erfindung lässt sich ein Verfahren zur Vermeidung einer Staubablagerung zwischen dem feststehenden Gehäuse und dem vertikal beweglichen Kraftübertragungsglied bei einerWaage, insbesondere einem Wägemodul realisieren, bei welchem ein sowohl während des Wägevorgangs, als auch ausserhalb des Wägevorgangs erfolgender Gasstrom vom beweglichen Teil der Waage weggerichtet ist. In bevorzugter Weise erfolgt der Gasstrom kontinuierlich oder alternativ in Form von pulsförmigen Gasausstössen.

Nachfolgend wird die Erfindung anhand von stark schematisierten Zeichnungen näher erläutert. Dabei zeigt:
- Figur 1: den Längsschnitt durch ein Wägemodul mit einer erfindungsgemässen Vorrichtung zum Entfernen des Staubs mittels eines Gases,
- Figur 2: den Längsschnitt durch ein Wägemodul mit einer anderen erfindungsgemässen, oben auf dem Gehäuse anzubringenden Vorrichtung zum Entfernen des Staubs,
- Figur 3: einen zweiteiligen Gasverteiler, in Perspektivischer Darstellung, in einer weiteren Ausführungsform,
- Figur 4: den Gasverteiler aus Figur 3, im Schnitt,
- Figur 5: den Gasverteiler aus Figur 3, in der Aufsicht.

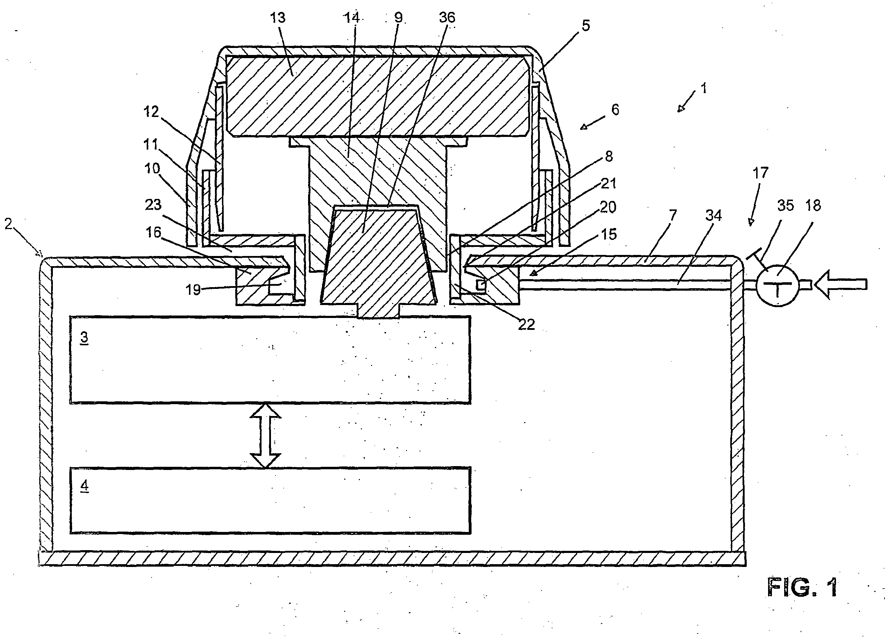

Die Figur 1 zeigt schematisch ein Wägemodul 1, zum Beispiel eine unterhalb eines Wiegeabschnittes eines Transportbandes anzuordnende Bandwaage, die ein dicht abgeschlossenes, leicht zu reinigendes Gehäuse 2 aufweist. Innerhalb des Waagengehäuses 2 ist eine an sich bekannte Wägezelle 3 angeordnet, die mit einer Wägeelektronik 4 verbunden ist. Über das Waagengehäuse 2 reicht ein mit einer topfförmigen Abdeckkappe 5 versehenes Kraftübertragungsglied 6 hinaus, das vertikal verschieblich durch eine Öffnung 8 der obere Gehäusewand 7 des Waagengehäuses 2 hindurch reicht, und das eine von einem Wäggut bewirkte Kraft an einen mit der Wägezelle 3 verbundenen konusförmigen Kraftaufnehmer 9 überträgt. Somit stellt das Kraftübertragungsglied 6 einen wesentlichen Bestandteil des beweglichen Teils der Waage dar.

Die topfförmige Abdeckkappe 5 ruht auf einem mit einem Nabenteil 14 verbundenen Aufsatz 13, welcher auf dem konusförmigen Kraftaufnehmer 9 aufgesetzt ist. Das Nabenteil 14 besitzt eine entsprechend konusförmige Aufnahmevertiefung 36.

Die Abdeckkappe 5 weist einen hülsenförmigen Aussenring 10 und einen röhrenförmigen Innenring 12 mit unterschiedlichen Durchmessern auf, die koaxial zueinander angeordnet sind und einen dazwischen liegenden Hohlraum seitlich begrenzen. Konzentrisch zur Öffnung 8 des Gehäuses 2 ist ein in Zusammenwirken mit den konzentrischen Ringen 10 und 12 eine Labyrinthdichtung gegen das Eindringen von Staub in das Waagengehäuse 2 bildender Zwischenring 11 zwischen dem Aussenring 10 und dem Innenring 12 am Gehäuse 2 angeordnet.

Die Abdeckkappe 5 kann zum Zwecke der Reinigung abgehoben werden. Dies ist insbesondere in staubiger Umgebung erforderlich. Da sich jedoch, wie eingangs beschrieben, bereits während des Wägebetriebs sehr viel Staub auf dem Waagengehäuse 2 niederschlagen kann, so dass dieser eine mechanische Brücke zwischen dem nicht beweglichen Waagengehäuse 2 und dem vertikal beweglichen Kraftübertragungsglied 6, insbesondere der Abdeckkappe 5 ausbildet, ist die Waage 1 mit einer Vorrichtung zur Staubentfernung 15 versehen, die in der in Figur 1 dargestellten Ausführungsform vorwiegend innerhalb des Waagengehäuses 2 angeordnet ist.

Die Vorrichtung zur Staubentfernung 15 verfügt über einen Gasverteiler 16, welcher fest mit der Unterseite der Gehäusewand 7 des Waagengehäuses 2 verbunden ist, sowie einer Gaszufuhreinrichtung 17, welche durch das Gehäuse 2 hindurch führend Gas, insbesondere Druckluft, dem Gasverteiler 16 von unten her zuführt. Der Gasdruck beziehungsweise derjenige der Druckluft kann über das Ventil 18 geregelt werden. Der Gasverteiler 16 weist entlang seinem Innenumfang eine Ausnehmung auf, welche einen Strömungskanal 19 bildet. In diesen gelangt das Gas oder die Druckluft durch einen Gaseinlass 20. Entlang eines schmalen Verbindungsspalts 21, der sich zwischen der Begrenzung 22 der Durchführung 8 einerseits und der Gehäusewand 7 andererseits befindet, gelangt die Druckluft aus dem Strömungskanal 19 direkt in einen Gasauslass 23, als eine Art Spalt, welcher parallel zur Gehäusewand 7 angeordnet ist, und welcher unter der Abdeckkappe 5 hindurch die im Strömungskanal 19 befindliche Druckluft in horizontaler Richtung nach aussen bläst. Auf diese Weise wird sich auf der Gehäusewand 7 ablagernder Staub weggeblasen, und es kann sich keine Staubbrücke zwischen der Abdeckkappe 5 und dem Waagengehäuse 2 bilden. Gleichzeitig wird durch die Begrenzung 22 vermieden, dass die ausströmende Druckluft die vertikale Bewegung des Kraftübertragungsglieds 6 beeinträchtigt und dadurch die Wägung beeinflusst.

Insbesondere ist diese Ausführungsform der Vorrichtung zur Staubentfernung 15 hervorragend in das Waagengehäuse 2 integriert.

Die Zufuhr des Gases oder der Druckluft erfolgt manuell oder automatisch gesteuert mittels eines Ventils 18, über eine Druckleitung 34. Das Ventil 18 verfügt dazu über eine manuell zu betätigende oder automatische Vorrichtung 35, die es erlaubt, Gas über die Druckleitung 34 in den Strömungskanal 19 unter einem vordefinierten Druck einzuführen.

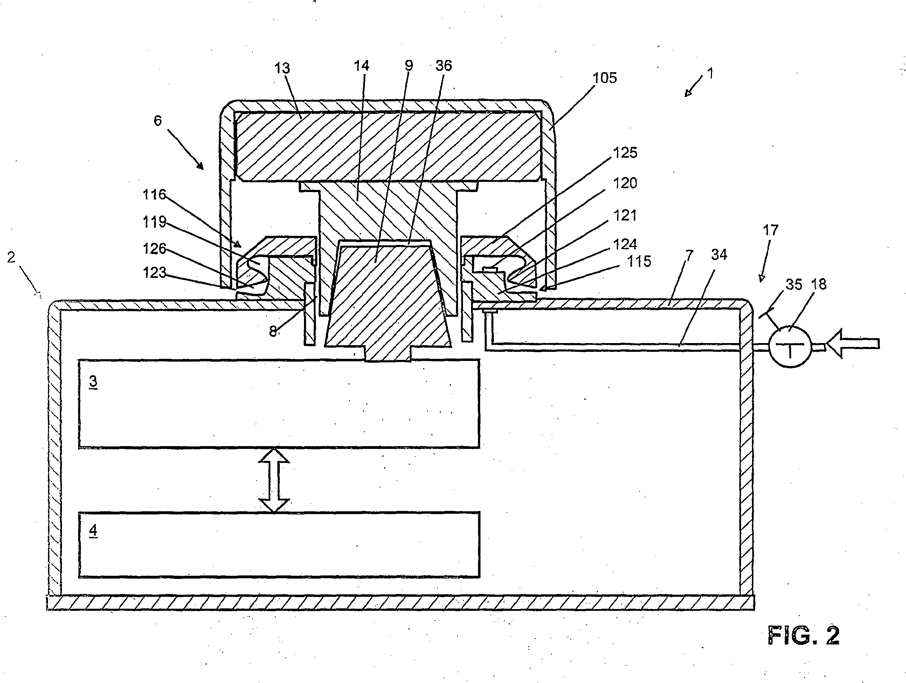

Die Figur 2 zeigt ein Wägemodul mit einer anderen Ausführungsform einer erfindungsgemässen Vorrichtung zur Staubentfernung 115. Teile, die in ihrer Ausführung gegenüber der Figur 1 nicht verändert sind, sind mit dem gleichen Bezugszeichen gekennzeichnet. Diese Vorrichtung zur Staubentfernung 115 kann von oben an die Oberseite 7 des Waagengehäuses 2 montiert werden und ist daher modular, da der Gasverteiler 116 im nachhinein angebracht werden kann und auch jederzeit wieder entfernt werden kann. Der Gasverteiler 116 ist zweiteilig ausgebildet und besteht aus einem Verteilerring 124 und einem Deckel 125. Letzterer ist mit einer einen Teil eines ersten Strömungskanals 119 bildenden speziellen Ausbuchtung versehen, die bei auf den Verteilerring 124 montiertem Deckel 125 exakt oberhalb des Gaseinlasses 120 zu liegen kommt, und die dazu geeignet ist, das Gas oder die Druckluft in den kreisförmigen ersten Strömungskanal 119 einzuleiten. Über einen schmalen Verbindungsspalt 121 ist der erste Strömungskanal 119 mit einem zweiten Strömungskanal 126 verbunden, an welchen sich der Gasauslass 123, hier wiederum als ein den gesamten Umfang des Gasverteilers 116 umfassender Spalt ausgestaltet, anschliesst. Ausserdem weist die in Figur 2 gezeigte Ausführungsform eine vereinfachte Form einer Abdeckkappe 105 auf.

Ein solcher zweiteiliger Gasverteiler 116 hat neben seinen verbesserten Montagemöglichkeiten noch den Vorteil, zu Reinigungszwecken besonders gut zerlegbar zu sein.

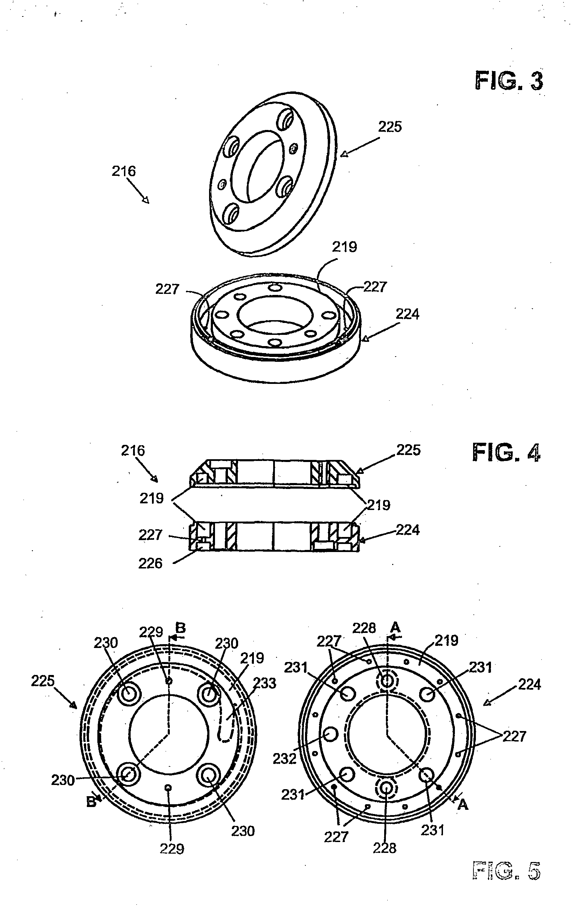

In der Figur 3 ist ein Gasverteiler 216, in dreidimensionaler Darstellung, in einer dritten Ausführungsform abgebildet. Er besteht wiederum aus einem Verteilerring 224 und einem Deckel 225 und weist ebenso, wie die anhand der Figur 2 beschriebene Ausführungsform, zwei vorzugsweise übereinander angeordnete Strömungskanäle auf (nur einer davon ist in der Figur sichtbar).

Wie aus der Figur 4, die für den Verteilerring 224 einen Schnitt entlang der Verbindung A - A in Figur 5, und für den Deckel 225 entlang der Verbindung B - B in Figur 5 zeigt, ersichtlich ist, setzt sich der erste Strömungskanal 219 aus jeweils einer in den unteren Verteilerring und in den Deckel eingearbeiteten, kreisförmigen Vertiefung zusammen. Diese bildet im montierten Zustand den ersten Strömungskanal, wobei dieser mit dem zweiten Strömungskanal 226 über mehrere vorzugsweise kreisförmige Gasdurchlassöffnungen 227 (siehe auch Figur 5) verbunden ist, durch welche das Gas, beziehungsweise die Druckluft, vom ersten in den zweiten Strömungskanal fliesst. Vom zweiten Strömungskanal 226 gelangt die Druckluft wiederum über einen Gasauslass, in Gestalt eines ringförmigen Spalts, welcher sich bei auf die obere Gehäusewand 7 montiertem Gasverteiler 216 zwischen Gehäusewand 7 und unterem Verteilerring 224 ausbildet. Die Abmessungen des Spalts liegen bei einer Dicke von 0,1 bis 0,5 mm, um einen genügend hohe Strömungsdruck aufrecht erhalten zu können.

In der Figur 5 ist sowohl der Deckel 225 als auch das Verteilerring 224 des Gasverteilers in der Aufsicht zu sehen. Die den ersten Strömungskanal 219 mit dem zweiten Strömungskanal 226 (siehe Figur 4) verbindenden Gasdurchlassöffnungen 227 sind hier deutlich zu sehen. Für die Befestigung des Deckels 225 am Verteilerring 224 dienen Schrauben, welche durch die Durchgangslöcher 228 in die Gewindebohrungen 229 im Deckel 225 eingedreht werden. Die Durchgangsbohrungen 230 im Deckel 225 und die Durchgangsbohrungen 231 im Verteilerring 224 sind für die Befestigung des Gasverteilers 216 an der oberen Gehäusewand 7 vorgesehen. Die Öffnung 232 im Verteilerring 224 ist Bestandteil des Gaseinlasses und mündet bei montiertem Deckel in eine Ausbuchtung 233, von wo die Druckluft in den ersten Strömungskanal 219 gelangt.

Der zweite Strömungskanal 226 (siehe Figur4) ist mit der mindestens einen Gehäusewand 7 derart verbunden, dass ein schmaler Spalt vorhanden ist, durch den die Luft in vorwiegend radialer Richtung nach aussen strömt.

Im übrigen ist es unerheblich, ob der Gasauslass direkt zwischen der Gehäusewand und dem Verteilerring ausgebildet ist oder, wie beispielsweise in der Figur 2 dargestellt, oder zwischen dem Verteilerring und dem Deckel angeordnet ist, oder ob der Verteilerring auf einem Sockel platziert ist, welcher seinerseits an der Gehäusewand befestigt ist.

Im Rahmen der vorliegenden Erfindung sind einteilige oder mehrteilige, insbesondere zweiteilige Ausführungsformen eines Gasverteilers denkbar, wobei ein solcher über einen Strömungskanal oder über zwei miteinander in Verbindung stehende Strömungskanäle verfügen kann.

Selbstverständlich ist eine erfindungsgemässe Vorrichtung zur Staubentfernung nicht zwingend an der oberen Gehäusewand angeordnet. Vielmehr ist sie jeweils dort angeordnet, wo auch der Durchgang für das Kraftübertragungsglied an der Waage angebracht ist, also beispielsweise unten, im Falle einer Unterflurwaage, oder an der Seite für einen seitlichen Durchtritt des Kraftübertragungsglieds durch das Waagengehäuse.

### Bezugszeichenliste

- 1: Waage, Wägemodul
- 2: Waagengehäuse, Gehäuse
- 3: Wägezelle
- 4: Wägeelektronik
- 5, 105: Abdeckkappe
- 6: Kraftübertragungsglied
- 7: Obere Gehäusewand
- 8: Öffnung des Waagengehäuses
- 9: konusförmiger Kraftaufnehmer
- 10: hülsenförmiger Aussenring
- 11: Zwischenring
- 12: röhrenförmiger Innenring
- 13: Aufsatz
- 14: Nabenteil
- 15,115: Vorrichtung zur Staubentfernung
- 16,116,216: Gasverteiler
- 17: Gaszufuhreinrichtung
- 18: Ventil
- 19: Strömungskanal
- 119,219: erster Strömungskanal
- 20, 120: Gaseinlass
- 21, 121: Verbindungsspalt
- 22: Begrenzung
- 23,123: Gasauslass
- 124,224: Verteilerring
- 125,225: Deckel
- 126,226: Zweiter Strömungskanal
- 227: Gasdurchlassöffnung
- 228: Durchgangslöcher
- 229: Gewindebohrungen
- 230: Durchgangsbohrungen
- 231: Durchgangsbohrungen
- 232: Öffnung
- 233: Ausbuchtung
- 34: Druckleitung
- 35: Manuell zu betätigende Vorrichtung
- 36: Aufnahmevertiefung

## Patentansprüche

1. Wägemodul (1) mit einem eine Wägezelle (3) allseitig umgebenden Gehäuse (2), mit einem vertikal beweglichen Kraftübertragungsglied (6), welches mit einer Lastauflagevorrichtung verbindbar ist, wobei das Kraftübertragungsglied (6) durch eine Öffnung (8) einer Gehäusewand (7) hindurch tritt und mit einem vertikal beweglichen Teil der Wägezelle (3) in starrer Verbindung steht, und wobei zur Vermeidung einer Staubablagerung zwischen dem feststehenden Gehäuse (2) und dem vertikal beweglichen Kraftübertragungsglied (6) eine mit einer Gaszufuhreinrichtung (17) versehene Vorrichtung zur Staubentfernung (15, 115) vorhanden ist, **dadurch gekennzeichnet, dass** die Vorrichtung zur Staubentfernung (15, 115) über einen mindestens einen ringförmigen Strömungskanal (19, 119, 219, 126, 226) für ein sich unter Überdruck befindendes Gas aufweisenden Gasverteiler (16, 116, 216) verfügt, wobei der mindestens eine Strömungskanal mit einem Gaseinlass (20, 120) in Verbindung steht und einen Gasauslass (23, 123) aufweist, zur Erzeugung eines vom beweglichen Teil der Waage weg gerichteten Gasstroms, wobei die Staubentfernungsvorrichtung dazu ausgelegt ist, den vom beweglichen Teil der Waage weg gerichteten Gasstrom sowohl während des Wägevorgangs als auch außerhalb des Wägevorgangs erfolgen lassen zu können, und wobei der Gasauslass in Form eines die Vorrichtung zur Staubentfernung umgebenden Spalts derart ausgebildet ist, dass der aus dem Gasauslass austretende Gasstrom vom beweglichen Teil der Waage weggerichtet ist.

2. Wägemodul (1) nach Anspruch 1, **dadurch gekennzeichnet, dass** der Gasverteiler (116, 216) mehrteilig, insbesondere zweiteilig, ausgestaltet ist und aus einem Verteilerring (124, 224) und einem mit diesem verbindbaren Deckel (125, 225) besteht.

3. Wägemodul (1) nach Anspruch 1 oder 2, **dadurch gekennzeichnet, dass** der Gasverteiler (16, 116, 216) aus zwei miteinander in Verbindung stehenden Strömungskanälen (119, 219, 126, 226) besteht, wobei ein erster Strömungskanal (119, 219) mit einem Gaseinlass (20, 120) in Verbindung steht und ein zweiter Strömungskanal (126; 226) einen Gasauslass (123) aufweist.

4. Wägemodul (1) nach einem der Ansprüche 1 bis 3, **dadurch gekennzeichnet, dass** der Gasverteiler (16) im Wesentlichen innerhalb des Waagengehäuses (2) angeordnet ist.

5. Wägemodul (1) nach einem der Ansprüche 1 bis 3, **dadurch gekennzeichnet, dass** der Gasverteiler (116, 216) von außen auf das Waagengehäuse (2) aufgesetzt ist.

6. Wägemodul (1) nach einem der Ansprüche 1 bis 5, **dadurch gekennzeichnet, dass** die Vorrichtung zur Staubentfernung (15, 115) für die Ausbildung eines kontinuierlichen Gasstroms ausgestaltet ist.

7. Wägemodul (1) nach einem der Ansprüche 1 bis 5, **dadurch gekennzeichnet, dass** die Vorrichtung zur Staubentfernung (15, 115) für die Ausbildung eines Gasstroms in Form von pulsförmigen Gasausstößen ausgestaltet ist.

8. Verfahren zur Vermeidung einer Staubablagerung zwischen dem feststehenden Gehäuse (2) und dem vertikal beweglichen Kraftübertragungsglied (6) bei einer Waage (1), beziehungsweise einem Wägemodul (1), mit einer Vorrichtung nach einem der Ansprüche 1 bis 7, **dadurch gekennzeichnet, dass** ein sowohl während des Wägevorgangs als auch außerhalb des Wägevorgangs erfolgender Gasstrom vom beweglichen Teil der Waage weg gerichtet ist.

9. Verfahren nach Anspruch 8, **dadurch gekennzeichnet, dass** der Gasstrom kontinuierlich erfolgt.

10. Verfahren nach Anspruch 8, **dadurch gekennzeichnet, dass** der Gasstrom in Form von pulsförmigen Gasausstößen erfolgt.

## Claims

1. A weighing module (1) with a housing (2) surrounding a load cell (3) on all sides, with a vertically movable load transmission element (6), which can be connected to a load support device, wherein the load transmission element (6) passes through an opening (8) of a housing wall (7) and is rigidly connected to a vertically movable part of the load cell (3) and wherein, in order to avoid the deposit of dust between the stationary housing (2) and the vertically movable load transmission element (6), a device for dust removal (15, 115) is present, which is provided with a gas supply unit (17), **characterised in that** the device for dust removal (15, 115) comprises a gas distributor (16, 116, 216) having at least one annular flow channel (19, 119, 219, 126, 226) for an over-pressurised gas, the at least one flow channel being connected to a gas inlet (20, 120) and having a gas outlet (23, 123), for generating a gas current directed away from the moving part of the weigh scale, wherein the dust removal device is designed to allow the occurrence of the gas current directed away from the moving part of the weigh scale, and wherein the gas outlet is configured in the form of a gap surrounding the device for dust removal such that the gas current exiting the gas outlet is directed away from the moving part of the weigh scale.

2. The weighing module (1) according to claim 1, **characterised in that** the gas distributor (116, 216) is of multi-part design, in particular two-part design and consists of a distributor ring (124, 224) and a lid (125, 225) connectable thereto.

3. The weighing module (1) according to claim 1 or 2, **characterised in that** the gas distributor (16, 116, 216) consists of two flow channels (119, 219, 126, 226) connected to each other, wherein a first flow channel (119, 219) is connected to a gas inlet (20, 120) and a second flow channel (126, 226) comprises a gas outlet (123).

4. The weighing module (1) according to one of claims 1 to 3, **characterised in that** the gas distributor (16) is arranged substantially within the weigh scale housing (2).

5. The weighing module (1) according to one of claims 1 to 3, **characterised in that** the gas distributor (116, 216) is placed onto the weigh scale housing (2) from the outside.

6. The weighing module (1) according to one of claims 1 to 5, **characterised in that** the device for dust removal (15, 115) is designed to form a continuous gas current.

7. The weighing module (1) according to one of claims 1 to 5, **characterised in that** the device for dust removal (15, 115) is designed to form a gas current in the form of pulse-shaped gas emissions.

8. A method for avoiding the deposit of dust between the stationary housing (2) and the vertically movable load transmission element (6) on a weigh scale (1) / a weighing module (1), with a device according to one of claims 1 to 7, **characterised in that** the gas current occurring both during and outside the weighing operation is directed away from the moving part of the weigh scale.

9. The method according to claim 8, **characterised in that** the gas current occurs continuously.

10. The method according to claim 8, **characterised in that** the gas current occurs in the form of pulse-shaped gas emissions.

## Revendications

1. Module de pesage (1) avec un boîtier (2) entourant de toutes parts une cellule de pesage (3), avec un organe de transmission de force (6) déplaçable verticalement, lequel peut être relié à un dispositif de support de charge, dans lequel l'organe de transmission de force (6) traverse une ouverture (8) dans une paroi de boîtier (7) tout en étant relié fixement à une partie déplaçable verticalement de la cellule de pesage (3), et dans lequel, pour éviter un dépôt de poussière entre le boîtier fixe (2) et l'organe de transmission de force (6) déplaçable verticalement, il est prévu un dispositif pour l'élimination de la poussière (15, 115) pourvu d'un dispositif d'alimentation en gaz (17), **caractérisé en ce que** le dispositif pour l'élimination de la poussière (15, 115) dispose d'au moins un canal d'écoulement annulaire (19, 119, 219, 126, 226) pour un distributeur de gaz (16, 116, 216) comportant un gaz sous surpression, l'au moins un canal d'écoulement étant relié à une entrée de gaz (20, 120) et comportant une sortie de gaz (23, 123), pour la production d'un flux de gaz opposé à la partie mobile de la balance, le dispositif pour l'élimination de la poussière étant conçu pour laisser s'écouler le flux de gaz opposé à la partie mobile de la balance aussi bien pendant l'opération de pesage qu'en dehors de l'opération de pesage, et la sortie de gaz étant formée comme une fente entourant le dispositif pour l'élimination de la poussière, de telle façon que le flux de gaz sortant par la sortie de gaz est opposé à la partie mobile de la balance.

2. Module de pesage (1) selon la revendication 1, **caractérisé en ce que** le distributeur de gaz (116, 216) est conçu en plusieurs parties, en particulier en deux parties, et constitué d'un anneau de distribution (124, 224) et d'un couvercle (125, 225) apte à être relié à celui-ci.

3. Module de pesage (1) selon la revendication 1 ou 2, **caractérisé en ce que** le distributeur de gaz (16, 116, 216) est constitué de deux canaux d'écoulement (119, 219, 126, 226) reliés l'un à l'autre, un premier canal d'écoulement (119, 219) étant relié à une entrée de gaz (20, 120) et un deuxième canal d'écoulement (126, 226) comportant une sortie de gaz (123).

4. Module de pesage (1) selon l'une des revendications 1 à 3, **caractérisé en ce que** le distributeur de gaz (16) est disposé essentiellement à l'intérieur du boîtier de balance (2).

5. Module de pesage (1) selon l'une des revendications 1 à 3, **caractérisé en ce que** le distributeur de gaz (116, 216) est placé sur le boîtier de balance (2) depuis l'extérieur.

6. Module de pesage (1) selon l'une des revendications 1 à 5, **caractérisé en ce que** le dispositif pour l'élimination de la poussière (15, 115) est conçu pour la formation d'un flux de gaz continu.

7. Module de pesage (1) selon l'une des revendications 1 à 5, **caractérisé en ce que** le dispositif pour l'élimination de la poussière (15, 115) est conçu pour la formation d'un flux de gaz sous la forme de rejets de gaz pulsés.

8. Procédé destiné à empêcher un dépôt de poussière entre le boîtier fixe (2) et l'organe de transmission de force (6) déplaçable verticalement d'une balance (1), notamment d'un module de pesage (1), avec un dispositif selon l'une des revendications 1 à 7, **caractérisé en ce qu'**un flux de gaz présent aussi bien pendant l'opération de pesage qu'en dehors de l'opération de pesage est opposé à la partie mobile de la balance.

9. Procédé selon la revendication 8, **caractérisé en ce que** le flux de gaz est continu.

10. Procédé selon la revendication 8, **caractérisé en ce que** le flux de gaz se présente sous la forme de rejets de gaz pulsés.
